(19) **Europäisches Patentamt**
**European Patent Office**
**Office européen des brevets**

(11) **EP 2 604 575 A1**

(12) **EUROPEAN PATENT APPLICATION**

(43) Date of publication:
**19.06.2013 Bulletin 2013/25**

(51) Int Cl.:
***C01B 15/10*** *(2006.01)*

(21) Application number: **11193231.5**

(22) Date of filing: **13.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **SOLVAY SA**
**1120 Bruxelles (BE)**

(72) Inventors:
• **Rabe, Jürgen H.**
**56598 Rheinbrol (DE)**
• **Wasem, Gabriele**
**53547 Hausen (DE)**

(74) Representative: **Gilliard, Pierre et al**
**Solvay S.A.**
**Intellectual Assets Management**
**Rue de Ransbeek, 310**
**1120 Bruxelles (BE)**

(54) **Process for the production of coated sodium percarbonate particles**

(57) Process for the production of coated sodium percarbonate particles having a dissolution time in water such that less than 50% of the particles are dissolved after 5 minutes in stirred water at 15°C, in which core particles comprising sodium percarbonate are heated and coated with a coating liquid comprising melted carboxylic acid and/or aliphatic alcohols having a melting temperature above 40°C, and the coated particles are then cooled at a temperature below the melting temperature of the carboxylic acid and/or aliphatic alcohols.

EP 2 604 575 A1

**Description**

The present invention is related to a process for the production of coated sodium percarbonate particles, to the use of the produced sodium percarbonate particles for the manufacture of detergent compositions and to detergent compositions.

The use of sodium percarbonate (or sodium carbonate peroxyhydrate) as the active bleach constituent in detergent compositions for household fabric washing or dish washing is well known. Commonly such detergent compositions contain among other components zeolites as builder material, enzymes, bleach activators and/or perfumes. The bleaching action of sodium percarbonate is due to the release of active oxygen when it decomposes during washing. However, the interaction between sodium percarbonate and other formulation components leads to progressive premature decomposition of the percarbonate and hence to loss of bleaching power during storage and transportation of the composition. This progressive decomposition is accelerated when the percarbonate is submitted to heating or stored in presence of humidity. Consequently, the storage of sodium percarbonate in moist and warm environments, as for instance when the product is marketed in southern countries, is difficult.

A number of proposals have been made to overcome this problem by interposing a layer between the sodium percarbonate and its environment. This layer, which usually coats a sodium percarbonate core acts as a protective layer which has a stabilizing action. A further difficulty is that such coating layers should not reduce excessively the relative active oxygen content of the sodium percarbonate. It is commonly accepted that it should also not reduce the dissolution rate of the sodium percarbonate particle, in washing conditions.

On the other side, detergent compositions wherein sodium percarbonate is introduced as bleach, comprise often enzymes, whose efficacity can be reduced by the release of active oxygen and hydrogen peroxide coming from the sodium percarbonate. For global optimum efficacity of the detergent composition, it is thus necessary to find a compromise between bleach and enzymes performance.

In US20050239681 are disclosed sodium percarbonate particles coated with sodium silicate, allowing improved enzyme performance.

Sodium silicate alkalinity can however reduce the sodium percarbonate stability in certain conditions.

Consequently, these known coating layers do not result in an optimum combination of properties since they do not confer simultaneously a good stability to the sodium percarbonate when present in the detergent composition, in particular when the detergent is stored in warm and moist environment, together with a good performance of enzymes.

The aim of the present invention is to overcome the aforementioned drawback by producing coated sodium percarbonate particles presenting a good stability while maintaining a good performance of enzymes in the detergent composition, and which can be produced at low cost.

Consequently, the invention concerns a process for the production of coated sodium percarbonate particles having a dissolution time in water such that less than 60% in weight of the particles are dissolved after 4 minutes in stirred water at 15°C, in which core particles comprising sodium percarbonate are heated and coated by contacting with a coating liquid comprising melted carboxylic acid and/or aliphatic alcohols having a melting temperature above 40°C, and the coated particles are then cooled at a temperature below the melting temperature of the carboxylic acid and/or aliphatic alcohols.

The amount of carboxylic acid and/or aliphatic alcohols in the coating liquid can be varied depending on the particulars of the detergent composition wherein the sodium percarbonate particles are to be incorporated. It has however been observed that the coating liquid comprises advantageously at least 75% in weight carboxylic acid and/or aliphatic alcohols.

Examples of carboxylic acids and/or aliphatic alcohols suitable for the invention are among others: stearic acid, hexadecanoic acid, tetradecanoic acid, arachidic acid, stearylalcohol. Stearic acid is preferred.

In a recommended embodiment of the invention, the coating liquid comprises at least 75% in weight stearic acid.

In the process according to the invention, the core particles comprising sodium percarbonate are heated above the melting temperature of the coating liquid, preferably at least 5°C above this melting temperature. Temperatures causing decompositions of the sodium percarbonate are to be avoided. Temperatures of more than 10°C above the melting temperature of the coating liquid are not recommended. After the contacting step, the coated particles are cooled below the melting temperature of the coating liquid. When the coating liquid solidifies at a temperature which is below its melting temperature, the coated particles are cooled below this solidifying temperature, preferably at least 5°C below their solidifying temperature.

The contacting step of the core particles with the coating liquid can be performed by any suitable technique. For instance, the core particles are contacted and coated with the coating liquid in mixers.

The coated sodium percarbonate particles prepared according to the invention have usually a dissolution rate such that, when introduced in water, after 1 minute, usually less than 10% in weight, advantageously less than 8%, even less than 6% in weight of the particle mass is dissolved. After 2 minutes usually less than 20%, advantageously less than 15, even less than 10% is dissolved. After 4 minutes the values are less than 60%, advantageously less than 50%, even less than 40%. Particularly preferred are values lower than 25, in some instance less than 20%. After 5 minutes the values are preferably less than 50%, advantageously less than 40%, even less than 30%. 90 % dissolution times are usually at least 10 min, preferably at least 12 min, even at least 15min. The dissolution rate and time are measured through conductivity measurements on the solution obtained after addition of coated sodium percarbonate particles to water at 15°C and 2g/l concentration. The measurement is adapted from ISO 3123-1976 (for industrial perborates), the only differences being the stirrer height (1 mm from the beaker bottom) and the beaker volume (2 litres, internal height 240 mm, internal diameter 120 mm). The stirrer speed is 350rpm.

The correspondence between conductivity and dissolution rate is given below, in the description of the examples.

The sodium percarbonate core particles used in the process according to the invention can be obtained for example by crystallisation from a bulk saturated solution of sodium percarbonate in a crystalliser/classifier, the percarbonate solution being prepared out of sodium carbonate and hydrogen peroxide. They could also be obtained for example by a fluid bed process, wherein aqueous hydrogen peroxide and aqueous soda ash solutions are sprayed onto sodium percarbonate seeds in a fluidised bed, or through the reaction of solid sodium carbonate with an aqueous hydrogen peroxide solution.

In a recommended embodiment of the invention, the core particle comprises sodium percarbonate produced by the crystallisation process. Preferably, the sodium percarbonate core particles are obtained by a crystallisation process using a salting-out agent.

The sodium percarbonate particles produced by the process according to the invention usually have sufficient stability. However, in circumstances wherein exceptional stability is required, additional stabilizing coating layers can be added.

In a particular embodiment of the invention, the core particles comprise inner core sodium percarbonate particles coated with at least one inner coating layer. In a variant of this embodiment, it is recommended that at least one inner coating layer comprises sodium carbonate and/or sodium sulphate. In this variant, at least one coating layer contains advantageously at least 25%, advantageously at least 30%, more advantageously at least 50%, preferably at least 75% in weight sodium carbonate. Preferably, at least 50%, advantageously at least 60%, preferably at least 70%, more preferably at least 80% most preferably at least 90% of the sodium carbonate which is present in the coating is in the monohydrate form. Values as high as at least 95%, even at least 99% can even be preferred.

It is recommended that the total amount of sodium carbonate monohydrate in the coating (including the different layers if appropriate) is at least 2% in weight of the coated particles, preferably at least 3%, more preferably at least 4%, most preferably at least 5%. The sodium percarbonate particles obtained according to the invention cannot however contain globally too much sodium carbonate. The total sodium carbonate monohydrate content of the coated particles should however represent less than 20% in weight of the particles, advantageously less than 18%, preferably less than 15%.

Additionally, at least one layer of the inner coating can contain in some instances advantageously additionally at least 10%, generally at least 20%, often at least 30%, sometimes at least 40% even at least 50% in weight of sodium sulphate.

In a particularly advantageous variant of the embodiment comprising an inner coating, the inner coating comprises at least one layer comprising a mixture of sodium carbonate and sodium sulphate. This layer amounts advantageously to at least 3 or sometimes 5% in weight of the coated particles. The relative weight in sodium carbonate and sodium sulphate in the mixture are preferably in the range 25:75 to 80:20 in weight, more preferably in the range 45:55 to 75:25. The preferred proportions of sodium carbonate in the monohydrate form are as described above.

The inner core particles can be contacted with the inner coating solution in a mixer. It is however recommended that the inner core particles are contacted with the inner coating solution by spraying this coating solution on the inner core particles in a fluid bed.

The coating of the coated particles produced according to the invention can advantageously contain only one layer (in addition to the possible inner layers) however it can contain several layers. Values of 2, 3 or 4 are common. The total coating (all coating layers, with the possible inner layers, included) represents advantageously from 5 to 20, more preferably from 6 to 15 weight % of the coated sodium percarbonate particle. The coated sodium percarbonate particles contain usually more than 70%, preferably more than 80%, more preferably more than 85%, in some instances more than 90% in weight of sodium percarbonate.

The coated sodium percarbonate particles obtained by the process according to the invention usually present a mean particle size of at least 500 μm. The mean particle size is advantageously at least 550 μm. It is generally at most 1500 μm. Preferably it is at most 1200 μm. Mean particle sizes from 500 to 1000 μm, preferably from 550 to 950 μm give good results. Particle sizes are measured by sieve analysis.

The coated sodium percarbonate particles obtained by the process according to the invention usually contain a fraction of particles having a particle size superior to 1000 μm of at most 30 % w/w. It is preferably at most 25 % w/w. large fractions above 1000 μm give rise to unwanted segregation of bleach from a detergent matrix on handling and can have an undesirable appearance. The fraction of particles having a particle size superior to 1000 μm is usually at

least 0,1 % w/w. On the other side, the coated sodium percarbonate particles according to the invention have preferably a negligible amount of particles having a particle size inferior to 150µm, this amount being usually less than 1 % w/w.

In an advantageous embodiment of the invention, the core of the coated particles have a particle size distribution such that at least 90%, preferably at least 95% in weight of the particles have a size greater than 325µm. The sieve analysis is performed on the particles before coating.

The coated sodium percarbonate particles obtained by the process according to the invention usually have a bulk density of at least 0,9 g/cm³. The bulk density is preferably at least 1,0 g/cm³. It is generally at most 1,2 g/cm³. It is in particular at most 1,1 g/cm³. Bulk densities from 0,9 to 1,2 g/cm³, preferably from 0,95 to 1,1 g/cm³ give good results. The bulk density is measured by recording the mass of sample in a stainless steel cylinder of internal height and diameter of 86.1 mm, after running the sample out of a funnel (upper internal diameter 108 mm, lower internal diameter 40 mm, height 130 mm) placed 50 mm directly above the receiver.

The coated sodium percarbonate particles obtained according to the invention present usually an Avox of at least 12 % w/w. The Avox is preferably at least 13 % w/w. The Avox is generally at most 15 % w/w. It is in particular at most 14% w/w. Avox values from 12 to 15 % w/w and preferably from 13 to 14 % w/w are convenient. The Avox is the available oxygen found in sodium percarbonate and indicates the amount of oxygen utilisable in a chemical reaction. It is measured by titration with potassium permanganate after dissolution in sulfuric acid (see ISO 1917-1982) according to the following reaction :

$$6H^+ + 2MnO_4^- + 5H_2O_2 \rightarrow 2Mn^{2+} + 8H_2O + 5O_2$$

For Avox calculation :

$$H_2O_2 \rightarrow H_2O + O \text{ where O represents Avox.}$$

The coated sodium percarbonate particles obtained according to the invention can advantageously be used as active bleach constituent in detergent compositions comprising enzymes.

The present invention therefore concerns also the use of coated sodium percarbonate particles having a dissolution time in water such that less than 50% in weight of the particles are dissolved after 5 minutes in stirred water at 15°C, the coated sodium percarbonate particles comprising sodium percarbonate core particles coated with carboxylic acid and/or aliphatic alcohols having a melting temperature above 40°C, for the manufacture of detergent compositions containing enzymes.

The invention concerns also detergent compositions containing enzymes and coated sodium percarbonate particles having a dissolution time in water such that less than 50% of the particles are dissolved after 5 minutes in stirred water at 15°C, the coated sodium percarbonate particles comprising sodium percarbonate core particles coated with carboxylic acid and/or aliphatic alcohols having a melting temperature above 40°C.

In the use and detergent compositions according to the invention, the coated sodium percarbonate particles are preferably according to the various embodiments and variants of the process according to the invention described above.

The detergent compositions contain usually also a builder, either zeolitic or non-zeolitic. The detergent compositions can also contain other constituents such as surfactants, anti-redeposition and soil suspension agents, bleach activators, optical brightening agents, soil release agents, suds controllers, fabric softening agents, perfumes, colours and processing aids. The incorporation of coated percarbonate particles obtained according to the invention into detergent powders or granules with a bulk density of 0,4 to 1,0 g/cm³ and into detergent tablets which are either zeolite or phosphate built is particularly advantageous.

In the examples whose description will follow, sodium percarbonate core particles were coated with different coating layers. The intrinsic stability of the coated particles was evaluated through intrinsic LKB. Their stability was also evaluated through UN - H4 tests. Those tests were performed in the following manner.

Intrinsic LKB test

The intrinsic stability of the percarbonate particles may be expressed as heat output at 40°C, 50°C or 60 °C measured in a closed ampoule of 3,5 ml. The heat flow (heat leakage) between the ampoule containing the coated sodium percarbonate particles and a temperature controlled bath is measured and compared to a reference material with a known heat of reaction. The measurement, performed by microcalorimetry, preferably using a LKB device, is made during 48h. The reported value is the heat flow at the end of the measurement.

Heat accumulation storage test (official UN - H4 test)

The stability of the coated percarbonate was also evaluated through the UN-H.4-Test. About 400 ml of coated sodium percarbonate are placed into a calibrated Dewar. The Dewar is equipped with a temperature sensor dipped in the evaluated mixture. The Dewar is then placed into an oven preheated at 70°C. The temperature of the sample and of the oven are continuously monitored. The time is noted at which the sample reaches a temperature of 68°C. The test is then continued for seven days. The SADT -self accelerating decomposition temperature-, resulting from this test, should be at least 75°C for a 50kg package. Details about this test can be found in : "Recommendations on the transport of dangerous goods / Manual of test and criteria" (chapter 28.4.4. Test H.4: Heat accumulation storage test);

United Nations Publication, fifth edition.

The diameters of the core and coated particles were measured by sieve analysis.
In this specification, except when explicitly stated, all percentages are weight percentages.

Examples

In the examples below, sodium percarbonate core particles were manufactured using a continuous aqueous crystallisation process. 2000 g of those core particles were then heated-up in a Lödige plough shear mixer (Type: M5-RMK).
The mixer was equipped with a double wall for heating and cooling. The sodium percarbonate core particles were heated up over period of 10 min to about 70°C, which was above the melting temperature of the coating agents, with a stirring speed of 60 rpm.
The coating agent in powder form was then added in the mixer during a period of 3 min, and the stirring speed was increased to 250 rpm. After 20 min of mixing, the coating agent was completely melted. Tap water was then introduced into the double wall of the mixer in order to cool the coated pparticles with tap water.
After 5 min of cooling, the coated particles were taken out of the mixer.
The dissolution rate of the coated particles in water was then analysed by a measurement of the conductivity of the resulting water solution during the dissolution of the particles. The conductivity was measured using a Inolab pH/cond level 3 device, produced by WTW. The amount of dissolved sodium percarbonate correlates indeed directly with the measured conductivity.
To that end, 11 of demineralized water (15°C) was filled in a 21 beaker. A stirrer was centered and fixed 1 cm above the bottom. The electrode of the conductivity measurement was fixed to measure inside the solution. The stirrer speed was fixed at 350 +-10 rpm.
In order to calibrate the measurement, 20 g of the coated sodium percarbonate particles were crushed in a mortar. 2g of crushed PCS was added to the water under stirring. After 10 min all the particles were dissolved and the conductivity did not evolve anymore. This value of conductivity of 2 trials was used as the 100% dissolution value.
Coated sodium percarbonate, obtained by the procedure described above without any further treatment was added to the water (using fresh water for every measurement). The conductivity data were collected.
The following formula was used to convert conductivity values into dissolution values:

$$\text{dissolved amount [\%] after x min} = \frac{\text{Conductivity}\,[\frac{mS}{cm}]\,\text{after x min}}{\text{Conductivity}\,[\frac{mS}{cm}]\,\text{after 10 min}} * 100\%$$

The results of the dissolution measurements after 1, 2, 3, 5 and 10 minutes are given in table 2.
The following measurements were also made on the coated particles: Avox, mean particle size, LKB stability and UN-H4 stability. The values are given on Table 2.
In comparative example 1, sodium silicate was used as coating agent, at a level of 6 weight %. The weight percentage are relative to the core particles. The composition of the coatings of examples 2 to 6 are given on table1. Stearic acid is produced by Riedel de Haen, whose melting temperature was 67-68°C. Melting temperature of palmitic acid was comprised between 62 and 64°C, of stearyl alcohol between 62 and 64°C and of polyethylene glycol (MG. 6000), between 55 and 60°C.

Table 1

| example | 2 | 3 | 4 | 5 | 6 |
|---|---|---|---|---|---|
| coating | Stearyl alcohol 6% | Polyethylene glycol 6% | Palmitic acid 6% | Stearic acid 3% | Stearic acid 5% |

Table2

| Example | | Comp 1 | 2 | 3 | 4 | 5 | 6 |
|---|---|---|---|---|---|---|---|
| AVOX | % | 13,04 | 12,51 | 12,69 | 13,44 | 13,34 | 13,25 |
| Mean Particle Size | $\mu$m | 1427 | 860 | 803 | 924 | 968 | 959 |
| Span | | | 0,32 | 0,98 | 1,07 | 0,87 | 0,81 | 0,82 |
| LKB 55°C | $\mu$W/g | 61 | 11,5 | 8,6 | 16 | 7,5 | 5,7 |
| UN - H4 Test_70°C | SADT (°C) | decomp. | 75 | decomp. | 75 | 75 | 75 |
| 1 minute | % | 11 | 41 | 86 | 5 | 9 | 5 |
| 2 minutes | % | 38 | 60 | 99 | 9 | 16 | 8 |
| 3 minutes | % | 60 | 73 | 100 | 13 | 23 | 12 |
| 5 minutes | % | 88 | 88 | 100 | 22 | 38 | 19 |
| 10 minutes | % | 100 | 100 | 100 | 44 | 73 | 41 |

**Claims**

1. Process for the production of coated sodium percarbonate particles having a dissolution time in water such that less than 60% of the particles are dissolved after 4 minutes in stirred water at 15°C, in which core particles comprising sodium percarbonate are heated and coated by contacting with a coating liquid comprising melted carboxylic acid and/or aliphatic alcohols having a melting temperature above 40°C, and the coated particles are then cooled at a temperature below the melting temperature of the carboxylic acid and/or aliphatic alcohols.

2. Process according to claim1, wherein the coating liquid comprises at least 75% in weight carboxylic acid and/or aliphatic alcohols.

3. Process according to claim 2, wherein the coating liquid comprises at least 75% in weight stearic acid.

4. Process according to claims 1 to 3, wherein the core particle comprises sodium percarbonate produced by the crystallisation process.

5. Process according to claims 1 to 4, wherein the core particles comprise inner core sodium percarbonate particles coated with at least one inner coating layers.

6. Process according to claim 5, wherein the at least one inner coating layer comprises sodium carbonate and or sodium sulphate.

7. Process according o claims 1 to 6, wherein the coated particles have a mean particle size between 500 and 1000 $\mu$m.

8. Process according o claims 1 to 7, wherein at least 90% in weight of the core particles have a mean particle size than 325$\mu$m.

9. Process according to claims 5 or 6, wherein the inner core particles are coated with the at least one inner coating layer by spraying an inner coating solution on the inner core particles in a fluid bed.

**10.** Use of coated sodium percarbonate particles having a dissolution time in water such that less than 50% in weight of the particles are dissolved after 5 minutes in stirred water at 15°C, comprising sodium percarbonate core particles coated with carboxylic acid and/or aliphatic alcohols having a melting temperature above 40°C, for the manufacture of detergent compositions containing enzymes.

**11.** Detergent compositions containing coated sodium percarbonate particles obtained by the process according to claims 1 to 9 as bleach active constituent.

Europäisches
Patentamt

European
Patent Office

Office européen
des brevets

## EUROPEAN SEARCH REPORT

Application Number

EP 11 19 3231

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 92/17404 A1 (HENKEL KGAA [DE]) 15 October 1992 (1992-10-15) * claims 1, 3, 6, 10-12; examples 1,2 * | 1-11 | INV. C01B15/10 |
| X | DE 41 29 242 A1 (HENKEL KGAA [DE]) 4 March 1993 (1993-03-04) * page 2, line 6; claims 1, 3, 9; examples * <br> * page 6, line 56 - line 57 * | 1-11 | |
| X | US 6 086 785 A (ROESLER RICHARD [BE] ET AL) 11 July 2000 (2000-07-11) * column 3, line 26 - line 47; examples 1-3; table 1 * <br> * column 5, line 37 - line 41 * | 1-11 | |
| X | US 5 902 682 A (BERTSCH-FRANK BIRGIT [DE] ET AL) 11 May 1999 (1999-05-11) * column 8, line 30 - line 53; claims 1,2,7,8 * <br> * column 10, line 50 - line 54 * | 1-11 | TECHNICAL FIELDS SEARCHED (IPC) |
| X | US 5 340 496 A (SATO KANJI [JP] ET AL) 23 August 1994 (1994-08-23) * claims 1,3,5,6,10,19,22; examples * | 1-11 | C01B |

The present search report has been drawn up for all claims

| Place of search | Date of completion of the search | Examiner |
|---|---|---|
| The Hague | 30 March 2012 | Engelen, Karen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 11 19 3231

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2012

| Patent document cited in search report | | Publication date | Patent family member(s) | | Publication date |
|---|---|---|---|---|---|
| WO 9217404 | A1 | 15-10-1992 | NONE | | |
| DE 4129242 | A1 | 04-03-1993 | NONE | | |
| US 6086785 | A | 11-07-2000 | AU | 1369797 A | 14-07-1997 |
| | | | DE | 19547055 A1 | 19-06-1997 |
| | | | EP | 0868396 A1 | 07-10-1998 |
| | | | ES | 2139401 T3 | 01-02-2000 |
| | | | JP | 2000502033 A | 22-02-2000 |
| | | | TW | 408177 B | 11-10-2000 |
| | | | US | 6086785 A | 11-07-2000 |
| | | | WO | 9722548 A1 | 26-06-1997 |
| US 5902682 | A | 11-05-1999 | NONE | | |
| US 5340496 | A | 23-08-1994 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050239681 A

**Non-patent literature cited in the description**

- Recommendations on the transport of dangerous goods / Manual of test and criteria